# EUROPEAN PATENT SPECIFICATION

(11) **EP 3 769 934 B1**
(45) Date of publication and mention of the grant of the patent: **23.02.2022**
(21) Application number: 20195494.8
(22) Date of filing: 27.04.2016
(51) Int. Cl.: B29C 49/46, B29C 49/12, B29C 49/48, B29C 49/58, B29C 49/06, B29C 49/42

(54) **ASEPTIC CONTAINER MOLDING METHOD AND APPARATUS AND ASEPTIC FILLING METHOD AND APPARATUS**
FORMVERFAHREN UND VORRICHTUNG ZUM HERSTELLEN VON ASEPTISCHEN BEHÄLTERN UND ASEPTISCHE FÜLLMETHODE UND VORRICHTUNG
PROCÉDÉ ET APPAREIL DE MOULAGE DE RÉCIPIENT ASEPTIQUE ET PROCÉDÉ ET APPAREIL DE REMPLISSAGE ASEPTIQUE

(30) Priority: 30.04.2015 JP 2015092904
(43) Date of publication of application: 27.01.2021
(62) Divisional of application: 16786513.8
(73) Proprietor: Dai Nippon Printing Co., Ltd., Shinjuku-ku, Tokyo 162-8001 (JP)
(72) Inventor: Hayakawa, Atsushi, Tokyo 162-8001 (JP)
(74) Representative: Müller-Boré & Partner Patentanwälte PartG mbB

(56) References cited:
- WO-A1-2014/127903
- JP-A- 2009 274 309
- US-A1- 2003 165 400
- US-A1- 2011 285 063
- US-A1- 2014 015 171

## Description

### Technical Field

The present invention relates to a method for molding an aseptic container, such as a bottle, and for aseptic filling of the aseptic container.

### Background Art

In-line systems have been proposed in which a blow-molding machine is arranged in a manufacturing line of a content such as a drink to manufacture a polyethylene terephthalate (PET) bottle in an in-line manner, and then the bottle is filled with the content in an aseptic manner (see Patent Literatures 1 and 2, for example).

An in-line system is to perform molding of the bottle and sterilization of the interior of the bottle at the same time by blasting a blow gas at a temperature equal to or higher than 110°C into a preform and supply the resulting aseptic bottle to the content filling line (see Patent Literature 1, for example). Another in-line system is to produce a PET bottle by blow-molding a preform while conveying the preform, blast a mist of hydrogen peroxide to the mouth portion of the bottle from a nozzle disposed at a fixed position, perform air rinsing of the bottle by blasting hot air into the bottle from an air nozzle that moves following the bottle, perform hot water rinsing of the bottle by pouring hot water into the bottle and then fill the resulting aseptic bottle with a content (see Patent Literature 2, for example).

However, with the former system, even though dry heat sterilization is used and blow molding is performed with hot gas, the bottle needs to be heated to 135°C over three hours, to 160°C over two hours or to 180°C over 30 minutes in order to achieve adequate sterilization. In addition, since different molding dies are used for primary blow molding and secondary blow molding, molding of the bottle takes a long time. In addition, the structure of the apparatus is complicated. Thus, there is a problem that the efficiency of production of aseptic bottles is low, and the efficiency of production of aseptic packages, which are the final product of the in-line system, is also low. With the latter system, the bottle travels past the nozzle that ejects a mist of hydrogen peroxide at a fixed position, so that there is a problem that the mist hardly reaches the whole of the interior of the bottle. In particular, the mist can hardly reach the bottom portion of the interior of the bottle, so that the bottom of the bottle is likely to be poorly sterilized. To avoid this, conventionally, a plurality of nozzles are arranged at fixed positions along the bottle conveying path to eject a large amount of mist, for example. However, this solution disadvantageously leads to an increase of consumption of hydrogen peroxide. In addition, if the traveling velocity of the bottles is increased in order to increase the efficiency of production of aseptic packages, the flow rate of the mist has to be further increased, which leads to a further increase of consumption of hydrogen peroxide.

As a solution to such a problem, a molding method has been devised in which a heated preform is put in a molding die having a cavity having the shape of a bottle, a mixture gas of a mist or gas of condensed hydrogen peroxide and a primary blow air is blasted into the preform to expand the preform into an intermediate molded product in the cavity and at the same time sterilize the interior of the intermediate molded product, and then a secondary blow air is blasted into the intermediate molded product to expand the intermediate molded product into a bottle in the cavity and at the same time remove the hydrogen peroxide in the bottle (see Patent Literature 3, for example). According to the molding method, the rate of sterilization of the container such as the bottle and the rate of molding of the container can be increased, the amount of hydrogen peroxide used, such as hydrogen peroxide, can be reduced, and the structure of the aseptic filling apparatus can be simplified.

### Citation List

### Patent Literature

Patent Literature 1: Japanese Patent Laid-open No. 2000-85001
Patent Literature 2: Japanese Patent Laid-open No. 2006-111295
Patent Literature 3: Japanese Patent Laid-open No. 2009-274309, corresponding to the preamble of claim 1.

### Summary of Invention

### Technical Problem

The above-described method that involves expanding a preform into an intermediate molded product in a cavity and at the same time sterilizing the interior of the intermediate molded product by blasting a mixture gas of a mist or gas of condensed hydrogen peroxide and a primary blow air into the preform described above has a problem that it is difficult to constantly supply a sterilizer with a fixed concentration into the preform, and during operation of the sterilizer apparatus, the concentration of the sterilizer in the mixture gas can vary, and the sterilization effect can decrease.

An object of the present invention is to solve the problem described above.

### Solution to Problem

To achieve the object described above, the present invention defined by a method in accordance with claim 1, is proposed.

Note that reference numerals in parentheses are given to facilitate understanding of the present invention and are not intended to limit the scope of the present invention.

A disclosed embodiment not fully corresponding to the invention adopts an aseptic container molding method, in which after a heated preform (1) is put in a molding die (6), the molding die (6) is clamped, and a mist or gas of a sterilizer or a mixture thereof is blasted into the preform (1), a blow molding air is blasted into the preform (1) to expand the preform (1) into a container (2) as a finished product, and the used blow molding air is discharged from the container (2) to remove hydrogen peroxide in the container (2).

After the mist or gas of the sterilizer or the mixture thereof is blasted into the preform (1), a primary blow molding air (P1) may be blasted into the preform (1) to expand the preform (1) into an intermediate molded product (2a) and at the same time sterilize an interior of the intermediate molded product (2a), a secondary blow molding air may then be blasted into the intermediate molded product (2a) to expand the intermediate molded product (2a) into the container (2) as the finished product, and the used blow molding air may be discharged from the container (2) to remove the sterilizer in the container (2).

The blow-molded container (2) may be subjected to air rinsing or aseptic water rinsing.

A a volatile substance may be added to the mist or gas of the sterilizer or the mixture thereof.

The disclosed embodiment not fully corresponding to the invention further adopts an aseptic filling method, in which after a heated preform (1) is put in a molding die (6), the molding die (6) is clamped, and a mist or gas of a sterilizer or a mixture thereof is blasted into the preform (1), a blow molding air is blasted into the preform (1) to expand the preform (1) into a container (2) as a finished product, the used blow molding air is discharged from the container (2) to remove the sterilizer in the container (2), the container (2) is removed from the molding die (6) traveling, and the container (2) filled with a content (a) and sealed while the container (2) is traveling.

After the mist or gas of the sterilizer or the mixture thereof is blasted into the preform (1), a primary blow molding air (P1) may be blasted into the preform (1) to expand the preform (1) into an intermediate molded product (2a) and at the same time sterilize an interior of the intermediate molded product (2a), a secondary blow molding air (P2) may then be blasted into the intermediate molded product (2a) to expand the intermediate molded product (2a) into the container (2) as the finished product, the used blow molding air may be discharged from the container (2) to remove the sterilizer in the container (2), and the container (2) may be removed from the molding die (6), filled with the content (a) and sealed.

The container (2) removed from the molding die (6) may be subjected to air rinsing or aseptic water rinsing and then filled with the content (a) and sealed.

A volatile substance may be added to the mist or gas of the sterilizer or the mixture thereof.

A disclosed embodiment not fully corresponding to the invention adopts an aseptic container molding apparatus, comprising a preform (1) conveying device that conveys a preform (1) on a first conveying path, and a molding die conveying device that conveys a molding die (6) that molds the preform (1) into a container (2) on a second conveying path connected to the first conveying path, in which after the preform (1) heated by a heater (11) disposed along the first conveying path is received in the molding die (6) on an upstream part of the second conveying path, and a mist or gas of a sterilizer or a mixture thereof is blasted into the preform (1), a blow molding air is blasted into the preform (1) to expand the preform (1) into a container (2) as a finished product on a downstream part of the second conveying path, and the used blow molding air is discharged from the container (2) to remove the sterilizer in the container (2).

After the mist or gas of the sterilizer or the mixture thereof is blasted into the preform (1), a primary blow molding air (P1) may be blasted into the preform (1) to expand the preform (1) into an intermediate molded product (2a) and at the same time sterilize an interior of the intermediate molded product (2a), a secondary blow molding air (P2) may then be blasted into the intermediate molded product (2a) to expand the intermediate molded product (2a) into the container (2) as the finished product, and the used blow molding air may be discharged from the container (2) to remove the sterilizer in the container (2).

The blow-molded container (2) may be subjected to air rinsing or aseptic water rinsing.

A volatile substance may be added to the mist or gas of the sterilizer or the mixture thereof.

A disclosed embodiment not fully corresponding to the invention further adopts an aseptic filling apparatus, comprising a preform conveying device that conveys a preform (1) on a first conveying path, a molding die conveying device that conveys a molding die (6) that molds the preform (1) into a container (2) on a second conveying path connected to the first conveying path, and a container conveying device that conveys the container (2) molded in the molding die (6) on a third conveying path connected to the second conveying path, in which after the preform (1) heated by a heater (11) disposed along the first conveying path is received in the molding die (6) on an upstream part of the second conveying path, and a mist or gas of a sterilizer or a mixture thereof is blasted into the preform (1), a blow molding air is blasted into the preform (1) to expand the preform (1) into a container (2) as a finished product on a downstream part of the second conveying path, the used blow molding air is discharged from the container (2) to remove the sterilizer in the container (2), and the container (2) is filled with a content (a) by a filler (46) on the third conveying path and then sealed.

The aseptic filling apparatus according to claim 13, after the mist or gas of the sterilizer or the mixture thereof is blasted into the preform (1), a primary blow molding air (P1) may be blasted into the preform (1) to expand the preform (1) into an intermediate molded product (2a) and at the same time sterilize an interior of the intermediate molded product (2a), a secondary blow molding air (P2) may then be blasted into the intermediate molded product (2a) to expand the intermediate molded product (2a) into the container (2) as the finished product, the used blow molding air may be discharged from the container (2) to remove the sterilizer in the container (2), and the container (2) may be removed from the molding die (6), filled with the content (a) and sealed.

The container (2) removed from the molding die (6) may be subjected to air rinsing or aseptic water rinsing and then filled with the content (a) and sealed.

A volatile substance may be added to the mist or gas of the sterilizer or the mixture thereof.

### Advantageous Effects of Invention

A disclosed embodiment not fully corresponding to the invention relates to after putting a heated preform (1) in a molding die (6), clamping the molding die (6) and blasting a mist or gas of a sterilizer or a mixture thereof into the preform (1), blasting a blow molding air into the preform (1) to expand the preform (1) into a container (2) as a finished product and discharging the used blow molding air from the container (2) to remove the sterilizer in the container (2). Thus, molding and sterilization of the container (2) such as a bottle can be performed at the same time, and the preform (1), which has a smaller surface area than the container (2), can be sterilized. Therefore, the preform (1) can be quickly sterilized with a reduced amount of sterilizer. Furthermore, since the mist or gas of the sterilizer or a mixture thereof is first blasted into the preform (1), and then the blow molding air is blasted into the preform (1), the sterilizer with an appropriate concentration can be supplied into the preform (1), so that the sterilization effect can be further improved.

Furthermore, if a volatile substance is added to the mist or gas of the sterilizer or a mixture thereof, the mist or gas of the sterilizer or a mixture thereof can be efficiently vaporized, and no heating process or the like for vaporizing the sterilizer is required, so that corrosion of the blow-molding machine due to the heating process can be avoided.

### Brief Description of Drawings

FIGS. 1 are diagrams for illustrating steps from heating of a preform to molding of an intermediate molded product of a container.
FIGS. 2 are diagrams for illustrating steps from molding of the container to completion of an aseptic package.
FIG. 3 is a plan view of an aseptic filling apparatus according to the present invention.
FIG. 4 is a schematic vertical cross-sectional view of a molding die in a blow-molding machine in the aseptic filling apparatus.
FIG. 5 is a vertical cross-sectional view showing an example of a vaporizer that produces a mist or gas of a sterilizer or a mixture thereof.
FIG. 6 is a diagram for illustrating a case where the mist or gas of the sterilizer or a mixture thereof and a primary blow molding air are blasted into the preform at the same time.
FIG. 7 is a plan view of an aseptic filling apparatus according to another embodiment of the present invention.
FIGS. 8 are diagrams for illustrating a step of air-rinsing the container, in which FIG. 8(A) shows a case where the container is in an upright position, FIG. 8(B) shows a case where the container travels in a duct, and FIG. 8(C) shows a case where the container is in an inverted position.

### Description of Embodiments

In the following, embodiments will be described.

### <First Embodiment>

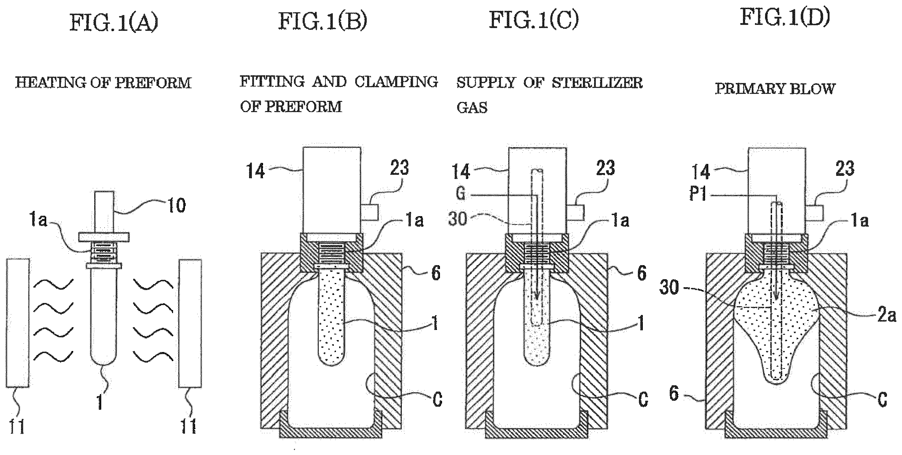

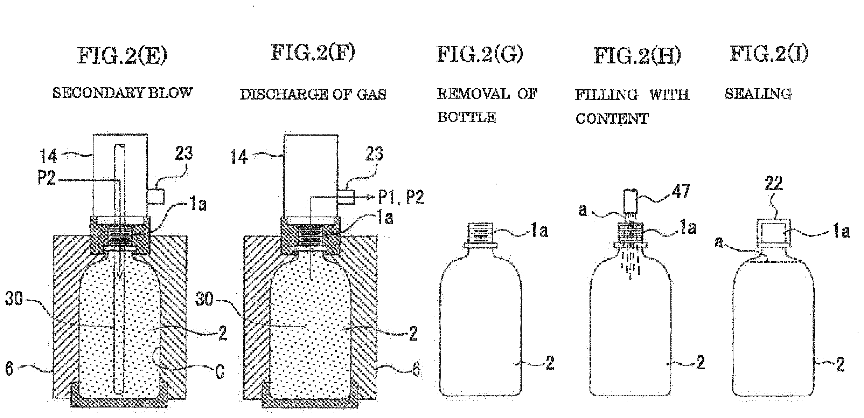

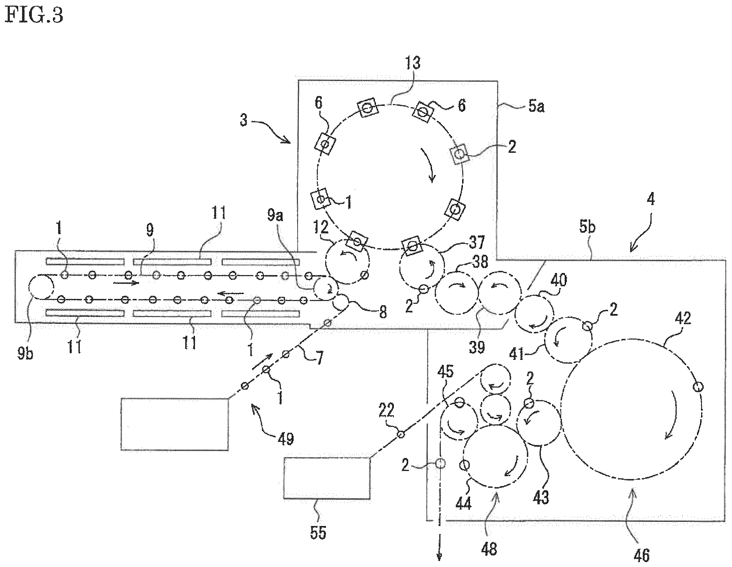

As shown in FIG. 3, an aseptic filling apparatus includes a preform supplying machine 49 that successively supplies preforms 1 (see FIG. 1(A)) at predetermined intervals, a blow-molding machine 3 that molds the preform 1 into a bottle 2 (see FIG. 2(G)), which is a container, and a filling machine 4 that fills the molded bottles 2 with a content "a" such as a drink and seals the bottles 2 (see FIGS. 2(H) and 2(I)).

Portions of the aseptic filling apparatus from middle portion of the preform supplying machine 49 to the filling machine 4 are covered by chambers 5a and 5b, which are protection covers. Aseptic air is constantly supplied from an aseptic air supply source (not shown) into the chambers 5a and 5b, thereby keeping the interior of the chambers 5a and 5b at a positive pressure.

As shown in FIG. 1(A), the preform 1 is a bottomed tubular body similar to a test tube and is formed from polyethylene terephthalate (PET), for example, by injection molding or the like. The preform 1 is eventually to be shaped by blow molding into the bottle 2, which is a container, as shown in FIG. 2(G). However, a mouth portion 1a, a male thread and the like similar to those of the finished bottle 2 are formed on the preform 1 in the early stage of the molding of the preform 1.

Between the preform supplying machine 49 and the filling machine 4 via the blow-molding machine 3, there are provided a preform conveying device that conveys the preform 1 on a first conveying path, a molding die conveying device that conveys a molding die 6 (see FIG. 1(B)) having a cavity C having the shape of the finished bottle 2 on a second conveying path connected to the first conveying path, and a container conveying device that conveys the bottle 2 molded in the molding die 6 on a third conveying path connected to the second conveying path.

The first conveying path including the preform conveying device, the second conveying path including the molding die conveying device and the third conveying path including the container conveying device are connected to each other, and a gripper and the like (not shown) for holding the preform 1 or the bottle 2 during conveyance and passing the preform 1 or the bottle 1 between different conveying paths is provided on these conveying paths.

The preform conveying device in the preform supplying machine 49 includes a shooter 7 that successively supplies preforms 1 at predetermined intervals, a wheel 8 that receives the preforms 1 from a terminal end of the shooter 7 and conveys the preforms 1, and an endless chain 9 that extends in a horizontal direction and receives and transfers the preforms 1.

The endless chain 9 is stretched between a pair of pulleys 9a and 9b that are disposed to be opposed to each other in a horizontal plane, and the shooter 7 is connected to one 9a of the pulleys.

A large number of holding members 10 for preforms 1 like that shown in FIG. 1(A) are attached to the endless chain 9 at regular intervals. Each holding member 9 can rotate on its axis while moving with the endless chain 9. The holding member 10 is formed as a spindle and has a plurality of ball-shaped elastic bodies (not shown) embedded in an outer surface of a lower portion thereof. Once the holding member 10 is inserted into the mouth portion 1a of the preform 1, the elastic bodies are elastically deformed to hold the preform 1 on the holding member 10.

The holding member 10 is inserted into the mouth portion 1a of the preform 1 passed from the wheel 8 to the endless chain 9 as shown in FIG. 1(A), and thus, the preform 1 is held in an upright position by the holding member 10.

If the holding member 10 is formed as a mandrel (not shown) instead of the spindle, the preform 1 can be supported in an inverted position during conveyance.

The endless chain 9 is surrounded by a heating furnace, and a heater 11 that emits infrared rays is provided all over an inner wall of the heating furnace.

After the preform 1 is received by the holding member 10 attached to the endless chain 9 via the shooter 7, the preform 1 travels with the endless chain 9 moving in one direction and is heated by the heater 11 to a temperature that allows blow molding. Preferably, the preform 1 is uniformly heated by rotating on its axis as the holding member 10 rotates until the temperature of the preform 1 excluding the mouth portion 1a rises to 90°C to 130°C, which is a temperature range suitable for blow molding. The temperature of the mouth portion 1a is kept to be equal to or lower than 70°C, at which no deformation or the like occurs, so that sealing between the mouth portion 1a and a cap 22 (see FIG. 2(I)) to be fitted on the mouth portion 1a is not compromised.

At a position where the pulley 9a at one end of the endless chain 9 is connected to the return run of the endless chain 9, a wheel 12 that receives the preform 1 heated by the heater 11 and conveys the preform 1 into the molding die 6 on the second conveying path is provided adjacent to the pulley 9a.

The blow-molding machine 3 includes the molding die conveying device on the second conveying path, and the molding die conveying device includes a wheel 13, which is connected to the wheel 12, on the second conveying path.

A plurality of molding dies 6 (see FIGS. 1(B), 1(C), 1(D) and 2(E)), which are a plurality of sets of split dies, that receive the preform 1 heated by the heater 11 and mold the preform 1 into the bottle 2 are disposed around the wheel 13 at predetermined intervals. The blow molding dies 6 rotate at a constant velocity around the wheel 13 as the wheel 13 rotates.

The molding die 6 has the cavity C in the shape of the finished bottle 2, which is a container, and is divided into an upper portion 6a that corresponds to the mouth portion 1a of the bottle 2, a middle portion 6b that corresponds to a trunk portion of the bottle 2, and a molding die bottom portion 6c that corresponds to a bottom portion of the bottle 2, for example.

As required, different temperatures are set for the parts 6a, 6b and 6c of the molding die 6. For example, temperatures for the upper portion 6a and the lower portion 6c of the molding die 6 that correspond to the mouth portion 1a and the bottom portion of the bottle 2 may be set to be lower than the temperature for the middle portion 6b. The mouth portion 1a of the bottle 2 is formed when the preform 1 is yet to be molded into the bottle 2, and the mouth portion 1a may be deformed if excessive heat is applied to the mouth portion 1a. Thus, the temperature for the upper portion 6a of the molding die 6 that comes into contact with the mouth portion 1a can be set lower to prevent deformation of the mouth portion 1a. The temperature for the lower portion 6c of the molding die 6 can be set to be lower than the temperature for the middle portion 6b so that the bottom of the bottle 2 can be quickly cooled to improve the stability of the bottle 2.

The middle portion 6b of each molding die 6 is divided into two, inner and outer, parts in the radial direction of the wheel 13, the inner part stays on a certain circumference when the molding die 6 is rotating, and the outer part can move in the radial direction. A cam (not shown) is disposed on the radially outer side of the outer part of the molding die 6. The molding die 6 is closed by the cam pressing the outer part against the inner part. Closing of the molding die 6 can also be achieved by cams pressing the inner part and the outer part of the molding die against each other.

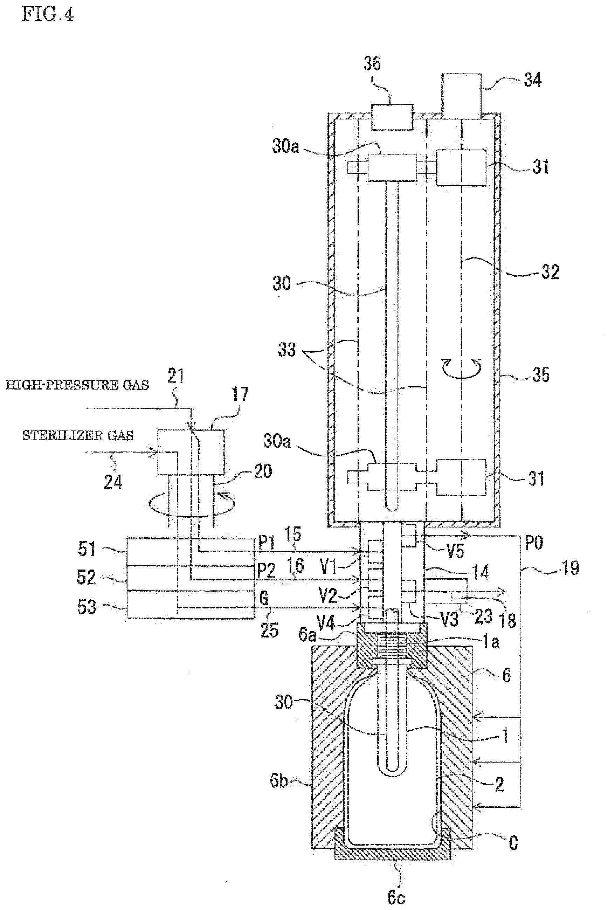

As shown in FIG. 4, a valve block 14 is provided adjacent to the upper portion 6a of the molding die 6. Valves V1, V2, V3, V4 and V5 are integrally provided in the valve block 14.

Piping 15 for supplying primary blow molding air P1 to the preform 1 in the molding die 6 is connected to the valve V1. The preform 1 is molded into an intermediate molded product 2a by blasting the primary blow molding air P1 (see FIG. 1(D)).

Piping 16 for supplying secondary blow molding air P2 into the intermediate molded product 2a is connected to the valve V2. The intermediate molded product 2a is molded into the bottle 2, which is a container, by blasting the secondary blow molding air P2 (see FIG. 2(E)) .

Piping 18 for discharging used blow molding air P1 and P2 and die clamping air described later is connected to the valve V3. A silencer 23 for reducing noise of air discharging is provided at an air outlet of the piping 18. As required, the silencer 23 is provided with a catalyst that decomposes a sterilizer such as hydrogen peroxide.

Piping 25 for supplying a mist or gas of a sterilizer or a mixture thereof to the preform 1 in the molding die 6 is connected to the valve V4.

The sterilizer effectively contains 1% or more of hydrogen peroxide. Alternatively, the sterilizer may contain one or more of ethanol, peracetic acid, ozone and a chlorine-based sterilizer or a mixture thereof.

Preferably, a volatile substance is added to the mist or gas of the sterilizer or a mixture thereof described above. The volatile substance is preferably ethanol, propanol or isopropanol, for example. If the volatile substance is added to the mist or gas of the sterilizer or a mixture thereof, the mist or gas of the sterilizer or a mixture thereof can be efficiently vaporized in the molding die 6, and no heating process for vaporizing the sterilizer is required, so that corrosion of the molding die 6 or other components due to the heating process can be avoided. The sterilizer preferably contains the added volatile substance such as ethanol as a main component and preferably contains 0.1% by weight to 35% by weight of hydrogen peroxide. In order to further reduce corrosivity and achieve a desired sterilization effect (6Log for B. atrophaeus spores), the concentration of hydrogen peroxide is more preferably 1% by weight to 5% by weight.

Piping 19 for supplying die clamping air P0 for further firmly clamping the molding die 6 closed by the cam is connected to the valve V5.

The blow molding air P1 and P2 and a sterilizer gas G having passed through the valves V1, V2 and V4, respectively, flow to the molding die 6 through a central hole of the valve block 14. The die clamping air P0 having passed through the valve V5 flows through a block (not shown) that covers the outer part of the molding die 6 to press the outer part of the molding die 6 against the inner part. The valve V3 discharges molding air P1 and P2 blasted into the molding die 6 and the die clamping air P0 from the molding die 6 to the outside atmosphere through the central hole or the like of the valve block 14.

As shown in FIG. 4, the piping 15, 16 and 25 are coupled, at an upstream side thereof, to a group of manifolds that rotate in synchronization with all the molding dies 6.

The group of manifolds is in a three-stage configuration including a first manifold 51 that supplies the primary blow molding air P1 to each molding die 6, a second manifold 52 that supplies the secondary blow molding air P2 to each molding die, and a third manifold 53 that supplies the mist or gas of the sterilizer or a mixture thereof to each molding die.

As the die clamping air P0, the primary blow molding air P1 supplied from the first manifold 51 or the secondary blow air P2 described later is used.

The group of manifolds is fixed to a central shaft 20 of the wheel 13 (see FIG. 3) and can rotate in synchronization with the wheel 13.

A rotary joint 17 is mounted on the central shaft 20, and piping 21 extending from a high-pressure air source (not shown), such as a compressor, is connected to the rotary joint 17. Air from the high-pressure air source is filtered by an aseptic filter (not shown) to produce aseptic air free of bacteria or the like. In addition, piping 24 extending from a vaporizer 26 that produces the mist or gas of the sterilizer or a mixture thereof is connected to the rotary joint 17.

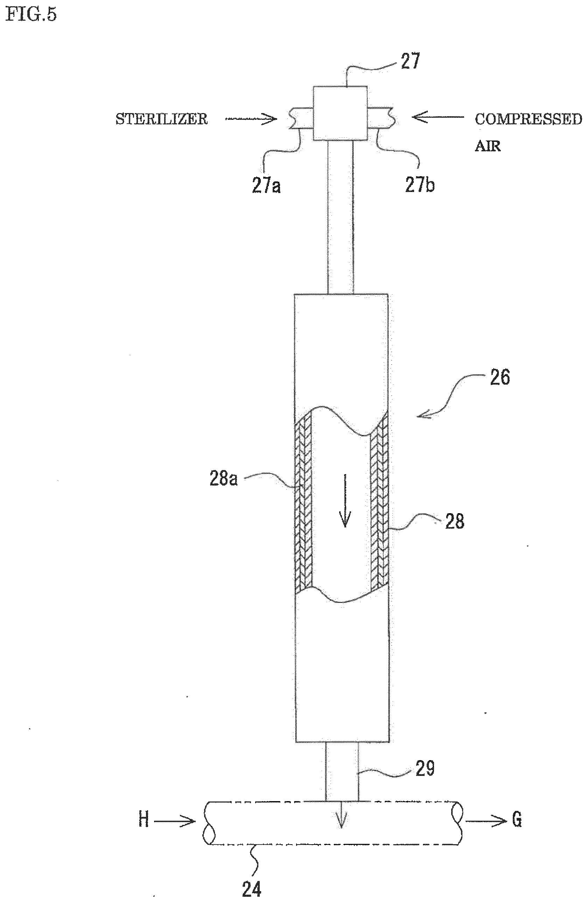

As the vaporizer 26, one which has the structure shown in FIG. 5 is used, for example.

The vaporizer 26 includes a hydrogen peroxide supplying portion 27 that is a twin-fluid spray that supplies a hydrogen peroxide solution serving as a sterilizer in the form of drops and an vaporizing portion 28 that vaporizes a spray of hydrogen peroxide supplied from the hydrogen peroxide supplying portion 27 by heating the spray of hydrogen peroxide to a temperature equal to or higher than the boiling point thereof and equal to or lower than the non-degradable temperature thereof. The hydrogen peroxide supplying portion 27 is configured to receive the hydrogen peroxide solution and compressed air from a hydrogen peroxide supply path 27a and a compressed air supply path 27b, respectively, and sprays the hydrogen peroxide solution into the vaporizing portion 28. The vaporizing portion 28 is a pipe that incorporates a heater 28a disposed between inner and outer walls thereof, and heats and vaporizes the spray of hydrogen peroxide blasted into the pipe. The vaporized hydrogen peroxide is ejected in the form of mist or gas or a mixture thereof from a nozzle 29 to the outside of the vaporizer 26.

The nozzle 29 is coupled to the piping 24 in a crossing manner. Aseptic hot air H is supplied to the piping 24 from an air source (not shown) disposed upstream of the piping 24. Thus, the mist or the like ejected from the nozzle 29 is mixed with the aseptic hot air H flowing in the piping 24 to form a hydrogen peroxide gas G, and the gas G flows to the valve block 14 through the piping 24, the rotary joint 17 and the third manifold 53.

As shown in FIG. 4, an extension rod 30 is provided outside the valve block 14 in such a manner that the extension rod 30 can protrude into and retract from the molding die 6 through the valve block 14. The extension rod 30 is disposed in such a manner that the central axis thereof is aligned with the extension of the central axis of the molding die 6 and the preform 1 held in the molding die 6.

A driving part that makes the extension rod 30 perform the protrusion and retraction operations described above is provided for the extension rod 30. More specifically, a nut 31 is coupled to a base portion 30a at a rear end of the extension rod 30, and a feeding threaded bar 32 that extends in parallel with the extension rod 30 is screwed into the nut 31. In order to precisely achieve the protrusion and retraction operations of the extension rod 30 described above, a guide member 33 that extends in parallel with the feeding threaded bar 32 is provided. One or more rail-shaped or bar-shaped guide members 33 are provided, and the guide members 33 are slidably engaged with the base portion 30a at the rear end of the extension rod 30 or with the nut 31.

The feeding threaded bar 32 is coupled to an output shaft of a servomotor 34 at one end thereof and thus can be rotated in both forward and reverse directions.

The extension rod 30, the feeding threaded bar 32 that is the driving part therefor and the like are covered by and sealed in a housing box 35 serving as a machine casing. The housing box 35 may be divided by a partition wall (not shown) into a section that houses the extension rod 30 and a section that houses the feeding threaded bar 32.

Reference numeral 36 denotes a ventilation part formed by a filter or the like through which any air containing the mist or gas of hydrogen peroxide serving as the sterilizer or a mixture thereof in the housing box 35 is discharged to the outside of the housing box 35 as described later. Hydrogen peroxide is trapped by the filter of the ventilation part 36 and decomposed, and air alone flows out of the housing box 35. The ventilation part 36 may simply be a ventilation hole instead of the filter.

As shown in FIG. 3, the second conveying path is provided with a train of wheels 37, 38 and 39. Once the finished bottle 2 is exposed in the molding die 6 opened, the bottle 2 is removed by a gripper disposed around the wheel 37 adjacent to the wheel 13 (see FIG. 2(G)) and conveyed to the wheel 38 and then to the wheel 39.

The section up to the wheel 37 may be an independent aseptic container molding apparatus, and the aseptic bottle 2 ejected from the apparatus may be fed to the filling machine 4 by air conveyance or a belt conveyor, for example, or temporarily stored in the aseptic condition.

As shown in FIG. 3, the filling machine 4 has a container conveying device that conveys the bottle 2 molded by the blow-molding machine 3 on the third conveying path. The third conveying path includes a train of wheels 40, 41, 42, 43, 44 and 45 following the wheel 39. The filling machine 4 is housed in the chamber 5b along with the wheels 40, 41, 42, 43, 44 and 45. Aseptic air is constantly blasted into the chamber 5b, so that the bottle 2 molded in an aseptic condition is conveyed without being secondarily contaminated by bacteria.

A filler 46 that fills the aseptic bottle 2 with the drink "a" is provided along the circumference of the wheel 42. The filler 46 has a large number of filling nozzles 47 arranged around the wheel 42, and the filling nozzles 47 can rotate around the wheel 42 and fill the traveling bottle 2 with the drink "a" (see FIG. 2(H)). A capper 48 that attaches a cap 22 (see FIG. 2(I)) to the bottle 2 filled with the drink "a" to seal the bottle 2 is provided around the wheel 44.

The filler 46 and the capper 48 are the same as well-known devices, and detailed descriptions thereof will be omitted.

Next, operations of the aseptic container molding apparatus and the aseptic filling apparatus described above will be described along with an aseptic container molding method and an aseptic filling method.

(1) First, a process of cleaning and sterilizing the interior of the chamber 5a of the blow-molding machine 3 and a process of cleaning and sterilizing the interior of the chamber 5b of the filling machine 4 are performed.

The process of cleaning and sterilizing the interior of the chamber 5b of the filling machine 4 is performed by a well-known cleaning-in-place (CIP) system or cleaning-out-of-place (COP) system and a sterilizing-in-place (SIP) system or sterilizing-out-of-place (SOP) system, and after the cleaning and sterilizing process.

For the interior of the chamber 5a of the blow-molding machine 3, the CIP or COP as the cleaning process may be omitted, and only the SIP or SOP may be performed.

(2) In parallel with the process of sterilizing the interiors of the chambers 5a and 5b, or after the process of sterilizing the interiors of the chambers 5a and 5b, a process of molding the preform 1 into the bottle 2 is started.

First, the preform 1 is introduced into the heating furnace by the shooter 7 and the wheel 8 and conveyed by the endless chain 9 in the heating furnace. The preform 1 is heated to a temperature range suitable for molding by the heater 11 while the preform 1 is conveyed by the endless chain 9 in the heating furnace (see FIG. 1(A)).

(3) The heated preform 1 is put in the molding die 6 rotating around the wheel 13, and the molding die 6 is closed by the action of a cam (not shown). In addition, the valve V5 is opened, so that the primary blow molding air P1 serving as the die clamping air P0 supplied from the first manifold 51 flows to the outer part of the molding die 6 through the piping 21, the rotary joint 17 and the manifold 51. As a result, the outer part of the molding die 6 is strongly pressed against the inner part to complete clamping of the molding die (see FIG. 1(B)).

(4) The servomotor 34 rotates in the forward direction, thereby lowering the extension rod 30 from the interior of the housing box 35 into the preform 1 through the central hole of the valve block 14 until the extension rod 30 abuts against the bottom of the preform 1 to start expanding the preform 1 (see FIG. 1(C)). Meanwhile, a valve part (not shown) provided on the extension rod 30 at a midpoint thereof closes the opening of the central hole of the valve block 14.

(5) While the extension rod 30 is being lowered into the preform 1, the valve V4 of the valve block 14 is opened. As a result, the sterilizer gas G such as hydrogen peroxide flows into the preform 1 held in the molding die 6 through the piping 24, the rotary joint 17 and the manifold 53 in the form of gas or mist or a mixture thereof. Bacteria in the preform 1 are killed by the sterilizer flowing into the preform 1. The part of the extension rod 30 in the preform 1 is also sterilized.

Once a predetermined amount of sterilizer gas G is supplied into the preform 1, the valve V4 is closed to stop the supply of the sterilizer into the preform 1.

(6) At the same time as the valve V4 being closed, the valve V1 is opened, and the high-pressure air serving as the primary blow molding air P1 is blasted into the preform 1 held in the molding die 6 through the piping 21, the rotary joint 17 and the manifold 51. The pressure of the primary blow molding air P1 is set to be lower than the high-pressure air by the action of a throttle valve (not shown) or the like.

Under the pressure of the blasted primary blow molding air P1 and the pressure exerted by the lowering extension rod 30, the preform 1 is expanded into the intermediate molded product 2a as shown in FIG. 1(D). The interior of the intermediate molded product 2a is also sterilized by the sterilizer supplied into the preform 1.

(7) Once the preform 1 is expanded into the intermediate molded product 2a having a predetermined size, the valve V1 is closed, and at the same time the valve V2 is opened so that a predetermined amount of high-pressure air serving as the secondary blow molding air P2 is blasted into the intermediate molded product 2a held in the molding die 6 through the piping 21, the rotary joint 17 and the manifold 52.

The blasting of the secondary blow molding air P2 causes expansion of the intermediate molded product 2a in the molding die 6 into the bottle 2 (see FIG. 2(E)).

(8) Once a predetermined amount of secondary blow molding air P2 is supplied to the intermediate molded product 2a, the valve V2 is closed to stop the supply of the secondary blow molding air P2.

(9) After the intermediate molded product 2a in the molding die 6 is expanded into the bottle 2 as shown in FIG. 2(E), the valve V3 is opened.

As a result, the used blow molding air P1 and P2 in the bottle 2 is discharged to the outside of the molding die 6 through the piping 18. In this step, the silencer 23 prevents occurrence of discharging noise. By discharging the used blow molding air P2 from the container 2, the sterilizer such as hydrogen peroxide in the container 2 is removed (see FIG. 2(F)).

The discharged used blow molding air P2 can also be reused as the blow molding air P1.

(10) The servomotor 34 rotates in the reverse direction, thereby lifting the extension rod 30 from the interior of the molding die 6 to the interior of the housing box 35 (see FIG. 4). As a result, the opening of the central hole of the valve block 14 that has been closed by the extension rod 30 is opened.

(11) Once the molding of the bottle 2 in the molding die is completed, the molding die 6 is opened, and the finished bottle 2 is removed from the molding die 6 by the gripper (not shown) disposed around the wheel 37 (see FIG. 2(F)) and conveyed around the wheels 38 and 39.

(12) The bottle 2 is passed to the wheels 40, 41, 42, 43, 44 and 45 in the filling machine 4 and travels in the filling machine 4.

(13) In the filling machine 4, while the bottle 2 is traveling around the wheel 42 provided with the filler 46, the bottle 2 is filled with the sterilized content "a", such as a drink, from the nozzle 47 in the filler 46 (see FIG. 2(H)). The capper 48 fits a cap 22 sterilized by a cap sterilizing apparatus 55 (see FIG. 3) onto the bottle 2 filled with the content "a" to seal the bottle 2 (see FIG. 2(I)), and the bottle 2 as an aseptic package is ejected from an outlet of the chamber 5b.

The cap sterilizing apparatus is a well-known apparatus, and detailed descriptions thereof will be omitted.

(14) The opening of the valve V4 in the step (5) described above and the opening of the valve V1 in the step (6) described above may be performed at the same time.

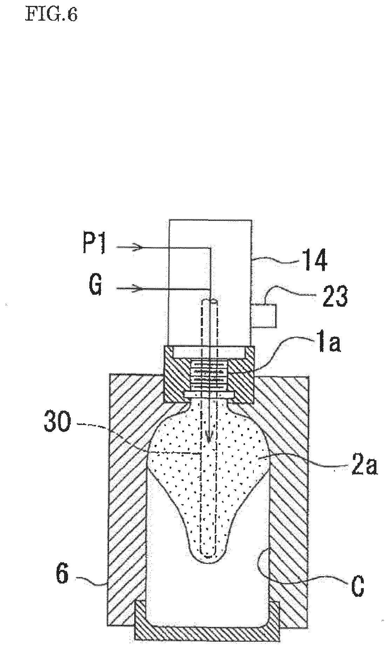

In that case, as shown in FIG. 6, the supply of the sterilizer gas G and the supply of the primary blow molding air P1 into the preform 1 or the intermediate molded product 21 are performed at the same time, so that the process of molding the aseptic bottle 2 is shortened.

Next, specific sterilization conditions and sterilization effects in the case where hydrogen peroxide is used as the sterilized in the step (5) described above will be described.

The inventor measured the effect of sterilization and the concentration of residual hydrogen peroxide on B.atrophaeus pores on the inner surface of a PET bottle having a volume of 500 milliliters (mL). The results are as shown in Tables 1 and 2 below.

**[TABLE 1]**

| DURATION OF SPRAYING OF HYDROGEN PEROXIDE GAS: 0.5 SECONDS | | |
|---|---|---|
| CONCENTRATION OF H₂O₂ GAS (mg/L) | CONCENTRATION OF RESIDUAL H₂O₂ (ppm) | STERILIZATION EFFECT (LRV) |
| 4.4 | N.D | 0.5 |
| 8.8 | 0.01 | 2.8 |
| 17.5 | 0.07 | 5.2 |

**[TABLE 2]**

| DURATION OF SPRAYING OF HYDROGEN PEROXIDE GAS: 2.0 SECONDS | | |
|---|---|---|
| CONCENTRATION OF H₂O₂ GAS (mg/L) | CONCENTRATION OF RESIDUAL H₂O₂ (ppm) | STERILIZATION EFFECT (LRV) |
| 4.4 | N.D | 3.3 |
| 8.8 | 0.03 | 5.1 |
| 17.5 | 0.1 | >6.0 |

Evaluation was conducted as follows.

Sterilization effect (Log Reduction Value) = Log(adhering bacteria count/surviving bacteria count)
Bacteria adhering to the inner surface of the bottle: B.atrophaeus ATCC9372
Method of measuring the concentration of residual hydrogen peroxide: oxygen electrode method (N.D.; <0.01 ppm)

Sterilization step: after the preform was heated, hydrogen peroxide gas was sprayed to the preform, and then blow molding was performed. For comparison, the hydrogen peroxide gas was sprayed for two different periods: 0.5 seconds and 2 seconds.

As is obvious from Table 1, when the duration of spraying of the hydrogen peroxide gas was 0.5 seconds, a sterilization effect of 5LRV was ensured if the concentration of the hydrogen peroxide gas was set at 17.5 mg/L. When the duration of spraying of the hydrogen peroxide gas was 2 seconds, a sterilization effect of 5LRV was ensured if the concentration of the hydrogen peroxide gas was set at 8.8 mg/L.

As can be seen from the test result described above, if the duration of spraying of the hydrogen peroxide gas is shorter than 0.5 seconds, the concentration of the hydrogen peroxide gas needs to be set higher, so that the hydrogen peroxide is more likely to condense, and it is more difficult to feed the hydrogen peroxide gas into the preform through the valve block. In order to achieve an adequate sterilization effect by introducing the hydrogen peroxide gas to the preform heated to 100°C or higher, the conditions shown in Tables above are appropriate.

On the other hand, the concentration of the residual hydrogen peroxide in the bottle was equal to or lower than 0.1 ppm under all the conditions shown in Tables 1 and 2 and thus was lower than 0.5 ppm, which is the level defined by FDA. Furthermore, if an air rinsing process (70°C or higher, 2.3 seconds or longer) described below with regard to the second embodiment was additionally performed after blow molding, the value of the concentration of the residual hydrogen peroxide was equal to or lower than the detection limit (N.D.).

### <Second Embodiment>

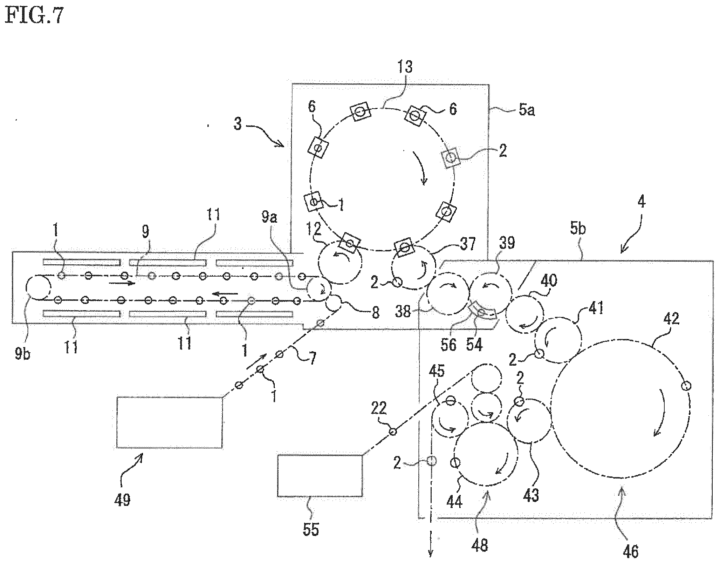

As shown in FIG. 7, according to a second embodiment, an air rinsing nozzle 54 for air-rinsing the bottle 2 is arranged on a conveying path for the molded bottle 2 between the blow-molding machine 3 and the filling machine 4.

One or more air rinsing nozzles 54 are disposed around the wheel 39, for example. The air rinsing nozzle 54 may be disposed around the wheel 37, 40 or 41 instead of, or in addition to, the wheel 39.

In addition, a conveying duct (not shown) filled with positive-pressure aseptic air may be provided around the wheel 39 or the like, and aseptic air may be blasted into the bottle 2 by passing the bottle 2 through the conveying duct. The bottle 2 can also be air-rinsed in this way.

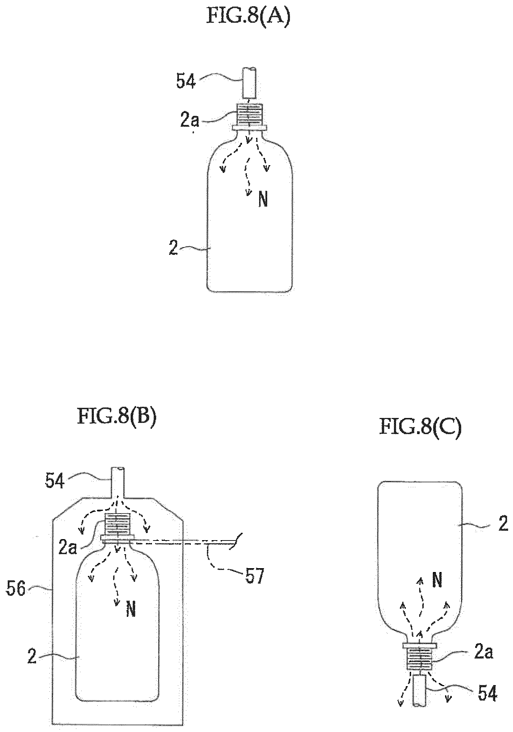

When the bottle 2 molded in the molding die 6 in the blow-molding machine 3 is traveling around the wheel 39, as shown in FIG. 8(A), aseptic air N is blasted to a mouth portion 2a of the bottle 2 from the air rinsing nozzle 54. In this way, the hydrogen peroxide remaining in the bottle 2 described with regard to the first embodiment is decomposed and removed.

The aseptic air N may be hot air. In that case, the hydrogen peroxide remaining in the bottle 2 is activated, so that the effect of sterilization of the bottle 2 is improved.

As shown in FIGS. 7 and 8(A), a tunnel-like duct 56 that surrounds the traveling bottle 2 may be provided at a position where the bottle 2 is subjected to air rinsing. If air rinsing is performed in the duct 56 in this way, contamination of the sterilized bottle 2 by bacteria is avoided, and the concentration of the residual hydrogen peroxide in the bottle 2 is reduced.

Reference numeral 57 denotes a gripper that holds the mouth portion 1a of the bottle 2 during conveyance. Instead of conveying the bottle 2 with the gripper, a support ring may be attached to the mouth portion 2a of the bottle 2 and put on two guide rails, and the bottle 2 may be conveyed by the air for air rinsing. In that case, the interior of the conveying duct is desirably sterilized by the sterilizer in advance.

As shown in FIG. 8(C), when the interior of the bottle 2 is air-rinsed with the aseptic air N, the bottle 2 may be inverted, and the aseptic air N may be blasted into the bottle 2 through the mouth portion 2a facing downward. In that case, foreign matters fall under their own weight, so that the foreign matters can be more easily removed from inside the bottle 2. Instead of the aseptic air N, aseptic water may be blasted into the bottle 2 through the mouth portion 2a of the bottle 2 facing downward.

The mechanism for inverting the bottle 2 has a well-known structure, so that detailed descriptions thereof will be omitted.

In the second embodiment, parts that are the same as those in the first embodiment are denoted by the same reference numerals as those in the first embodiment, and redundant descriptions thereof is omitted.

### Reference Signs List

- 1: preform
- 2: container (bottle)
- 2a: intermediate molded product
- 6: molding die
- 11: heater
- 46: filler
- P1: primary blow molding air
- P2: secondary blow molding air
- a: content

## Claims

1. An aseptic filling method, wherein after a heated preform (1) is put in a molding die (6), the molding die (6) is clamped, and a mist or gas of a sterilizer or a mixture thereof is blasted into the preform (1), a blow molding air is blasted into the preform (1) to expand the preform (1) into a container (2) as a finished product, the used blow molding air is discharged from the container (2) to remove the sterilizer in the container (2), and the container (2) is removed from the molding die (6), filled with a content and sealed,
wherein after the mist or gas of the sterilizer or the mixture thereof is blasted into the preform (1), a primary blow molding air (P1) is blasted into the preform (1) to expand the preform (1) into an intermediate molded product (2a) and at the same time sterilize an interior of the intermediate molded product (2a),
**characterized in that**
a secondary blow molding air (P2) is then blasted into the intermediate molded product (2a) to expand the intermediate molded product (2a) into the container (2) as the finished product, the used blow molding air is discharged from the container (2) to remove the sterilizer in the container (2), and the container (2) is removed from the molding die (6), filled with the content and sealed.

2. The aseptic filling method according to claim 1,
wherein the container (2) removed from the molding die (6) is subjected to air rinsing or aseptic water rinsing and then filled with the content and sealed.

3. The aseptic filling method according to claim 1 or 2,
wherein a volatile substance is added to the mist or gas of the sterilizer or the mixture thereof.

## Patentansprüche

1. Aseptisches Befüllungsverfahren, wobei, nachdem eine erwärmte Vorform (1) in eine Formdüse (6) eingebracht worden ist, die Formdüse (6) geklemmt wird, und ein Nebel oder Gas eines Sterilisators oder ein Gemisch davon in die Vorform (1) geblasen wird, eine Blasformluft in die Vorform (1) geblasen wird, um die Vorform (1) in einen Behälter (2) als ein fertiges Produkt zu expandieren, die verwendete Blasformluft aus dem Behälter (2) ausgetragen wird, um den Sterilisator in dem Behälter (2) zu entfernen, und der Behälter (2) aus der Formdüse (6) entfernt wird, gefüllt mit einem Inhalt und verschlossen,
wobei, nachdem der Nebel oder das Gas des Sterilisators oder das Gemisch davon in die Vorform (1) geblasen worden ist, eine primäre Blasformluft (P1) in die Vorform (1) geblasen wird, um die Vorform (1) in ein intermediäres Formprodukt (2a) zu expandieren und gleichzeitig einen Innenbereich des intermediären Formprodukts (2a) zu sterilisieren,
**dadurch gekennzeichnet, dass**
eine sekundäre Blasformluft (P2) dann in das intermediäre Formprodukt (2a) geblasen wird, um das intermediäre Formprodukt (2a) in den Behälter (2) als das fertige Produkt zu expandieren, die verwendete Blasformluft aus dem Behälter (2) ausgetragen wird, um den Sterilisator in dem Behälter (2) zu entfernen, und der Behälter (2) aus der Formdüse (6) entfernt wird, gefüllt mit dem Inhalt und verschlossen.

2. Aseptisches Befüllungsverfahren gemäß Anspruch 1, wobei der Behälter (2), entfernt aus der Formdüse (6), einem Luftspülen oder aseptischen Wasserspülen unterworfen wird und anschließend mit dem Inhalt gefüllt und verschlossen wird.

3. Aseptisches Befüllungsverfahren gemäß Anspruch 1 oder 2, wobei eine flüchtige Substanz zu dem Nebel oder dem Gas des Sterilisators oder dem Gemisch davon zugegeben wird.

## Revendications

1. Procédé de remplissage aseptique, dans lequel après qu'on a mis une préforme (1) chauffée dans une matrice de moulage (6), la matrice de moulage (6) est bridée et une brume ou un gaz de stérilisant ou un mélange de ceux-ci est injecté dans la préforme (1), un air de moulage par soufflage est injecté dans la préforme (1) pour agrandir la préforme (1) en un récipient (2) en tant que produit fini, l'air de moulage par soufflage usagé est déchargé du récipient (2) pour éliminer le stérilisant dans le récipient (2), et le récipient (2) est retiré de la matrice de moulage (6), rempli d'un contenu et scellé,
dans lequel, après que la brume ou le gaz du stérilisant ou un mélange de ceux-ci a été injecté dans la préforme (1), un air primaire de moulage par soufflage (P1) est injecté dans la préforme (1) pour agrandir la préforme (1) en un produit moulé intermédiaire (2a) et en même temps stériliser l'intérieur du produit moulé intermédiaire (2a),
**caractérisé en ce que**
un air secondaire de moulage par soufflage (P2) est ensuite injecté dans le produit moulé intermédiaire (2a) pour agrandir le produit moulé intermédiaire (2a) en récipient (2) en tant que produit fini, l'air de moulage par soufflage usagé est déchargé du récipient (2) pour éliminer le stérilisant dans le récipient (2), et le récipient (2) est retiré de la matrice de moulage (6), rempli du contenu et scellé.

2. Procédé de remplissage aseptique selon la revendication 1, dans lequel le récipient (2) retiré de la matrice de moulage (6) est soumis à un rinçage par air ou un rinçage par eau aseptique, puis rempli du contenu et scellé.

3. Procédé de remplissage aseptique selon la revendication 1 ou 2, dans lequel une substance volatile est ajoutée à la brume ou au gaz du stérilisant ou du mélange de ceux-ci.
